# EUROPEAN PATENT APPLICATION

(11) **EP 3 748 712 A1**
(43) Date of publication of application: **09.12.2020**
(21) Application number: 19750601.7
(22) Date of filing: 29.01.2019
(51) Int. Cl.: H01M 2/04, H01M 2/20

(54) **BATTERY POWER EXTRACTION AND INTEGRATION STRUCTURE, BATTERY PACK AND VEHICLE**

(30) Priority: 08.02.2018 CN 201810129241
(71) Applicant: BYD Company Limited, Guangdong 518118 (CN)
(72) Inventor: ZHANG, Mingming, Shenzhen, Guangdong 518118 (CN); PENG, Qingbo, Shenzhen, Guangdong 518118 (CN); LIU, Jia, Shenzhen, Guangdong 518118 (CN); HUANG, Muqing, Shenzhen, Guangdong 518118 (CN); ZHU, Yan, Shenzhen, Guangdong 518118 (CN); ZHU, Jianhua, Shenzhen, Guangdong 518118 (CN)
(74) Representative: Hoffmann Eitle
(86) International application number: PCT/CN2019/073644
(87) International publication number: WO 2019/154176

(57) **Abstract**

Disclosed are a battery power lead-out integrated structure (100), a battery pack (200), and a vehicle (300). The battery power lead-out integrated structure (100) includes an end plate (21) as a part of a battery pack housing and a copper bar for leading out two electrodes of a battery (10) to outside of the battery pack housing, where the end plate (21) is made of an insulating material, and the copper bar is encapsulated in the end plate (21) by injection molding, electrical connection portions of the copper bar being exposed.

## Description

### CROSS-REFERENCE TO RELATED APPLICATIONS

The present disclosure claims priority to Chinese Patent Application No. 201810129241.4, filed on February 8, 2018, which is incorporated herein by reference in its entirety.

### FIELD

The present disclosure relates to the field of electric vehicles, and in particular, to a battery power lead-out integrated structure, a battery pack, and a vehicle.

### BACKGROUND

As an energy storage device, a battery pack is a core component of a hybrid electric vehicle and an electric vehicle. The battery pack is mainly composed of a battery pack housing, a battery group , and a copper bar. The battery pack housing is wrapped outside the battery group, the battery group is formed by connecting a plurality of cells in series and parallel, and the copper bar leads out power of the battery group to the outside of the battery pack housing. In the prior art, the copper bar passes through an opening on the battery pack housing to lead out total positive and negative electrodes of the battery to the outside of the battery pack housing. To ensure battery safety and personnel safety, the copper bar is covered with an insulating film. During the long-term use of the battery pack, due to vibration of the vehicle, friction occurs between the copper bar and the opening on the battery pack housing, and the insulation film is easy to wear and scrape, resulting in electric leakage.

### SUMMARY

The present disclosure proposes a battery power lead-out integrated structure, which can prevent electric leakage as a result of friction with the battery pack housing due to a copper bar passing through an opening on a battery pack housing, thereby improving safety.

The present disclosure further provides a battery pack having the foregoing battery power lead-out integrated structure.

The present disclosure further provides a vehicle having the foregoing battery pack.

A battery power lead-out integrated structure according to a first aspect of the present disclosure includes an end plate as a part of a battery pack housing and a copper bar for leading out two electrodes of a battery to outside of the battery pack housing, where the end plate is made of an insulating material, and the copper bar is encapsulated in the end plate by injection molding, electrical connection portions of the copper bar being exposed.

In the battery power lead-out integrated structure of the present disclosure, only a part to be electrically connected is exposed by encapsulating the copper bar in the end plate by injection molding, which can reduce the use of the insulating film and can reduce costs. In addition, the copper bar and the end plate are fixedly mounted by injection molding, which solves the technical problem of leakage as a result of friction with the battery pack housing due to the copper bar passing through the opening on the battery pack housing, and the end plate has better wear resistance than the insulating film, thereby increasing safety. Furthermore, the copper bar is integrated on the end plate, so that inner space of the battery pack can be effectively saved.

According to some embodiments of the present disclosure, the electrical connection portions are two ends of the copper bar, a part between the two ends of the copper bar being encapsulated in the end plate by injection molding.

According to some embodiments of the present disclosure, the battery power lead-out integrated structure further includes a circuit protection device mounted on the end plate, where the copper bar includes a first copper bar, a second copper bar, and a third copper bar, a first end of the first copper bar being connected to a first electrode lead-out end of the battery, a second end of the first copper bar being connected to one end of the circuit protection device, a first end of the second copper bar being connected to the other end of the circuit protection device, a second end of the second copper bar being exposed from an external side surface of the end plate, a first end of the third copper bar being connected to a second electrode lead-out end of the battery, and a second end of the third copper bar being exposed from the external side surface of the end plate.

According to some embodiments of the present disclosure, the first electrode lead-out end of the battery is a negative lead-out end of the battery, and the second electrode lead-out end of the battery is a positive lead-out end of the battery.

According to some embodiments of the present disclosure, a groove recessed inward is formed on the external side surface of the end plate, the circuit protection device being disposed in the groove.

According to some embodiments of the present disclosure, the first copper bar, the second copper bar, the third copper bar, and the circuit protection device are all disposed along a side wall of the groove, the first end and the second end of the first copper bar, the first end of the second copper bar, and the first end of the third copper bar being all exposed from the side wall of the groove.

According to some embodiments of the present disclosure, the battery power lead-out integrated structure further includes an information collector and a low-voltage connector, the information collector being disposed in the groove, the low-voltage connector being encapsulated on the end plate by injection molding and protruding from the external side surface of the end plate, and the low-voltage connector being electrically connected to the information collector.

According to some embodiments of the present disclosure, an opening is formed on a bottom surface of the groove.

According to some embodiments of the present disclosure, a panel is detachably connected to the outside of the end plate, the panel covering the groove.

A battery pack according to a second aspect of the present disclosure includes a battery, a battery pack housing body, and the battery power lead-out integrated structure as described above, where the battery is accommodated in the battery pack housing body, the battery pack housing body and an end plate constitute a battery pack housing, and the battery includes a plurality of cells and a power connecter, two adjacent cells being connected in series or in parallel through the power connecter.

A vehicle according to a third aspect of the present disclosure has the battery pack as described above.

Other features and advantages of the present disclosure will be described in detail in the following specific embodiment part.

### BRIEF DESCRIPTION OF THE DRAWINGS

The accompanying drawings are intended to provide further understanding of the present disclosure and constitute a part of this specification. The accompanying drawings and the specific implementations below are used together for explaining the present disclosure rather than constituting a limitation to the present disclosure. In the accompanying drawings:
FIG. 1 is a three-dimensional view of a battery power lead-out integrated structure according to an implementation of the present disclosure, in which an information collector, a low-voltage connector, and a panel are not shown.
FIG 2 is a three-dimensional view of a copper bar and a circuit protection device in a battery power lead-out integrated structure according to an implementation of the present disclosure.
FIG. 3 is a three-dimensional view of a battery power lead-out integrated structure according to an implementation of the present disclosure.
FIG. 4 is a three-dimensional view of a battery power lead-out integrated structure according to an implementation of the present disclosure, in which a panel is shown.
FIG. 5 is an exploded view of a battery pack according to an implementation of the present disclosure.
FIG. 6 is a three-dimensional view of a flexible circuit board in a battery pack according to an implementation of the present disclosure.
FIG. 7 is a schematic structural diagram of a vehicle according to the present disclosure.

### Reference numerals:

100. Battery power lead-out integrated structure, 21. End plate, 211. Groove, 212. Opening, 213. First mounting hole, 214. Third mounting hole, 22. First copper bar, 221. First end of the first copper bar, 222. Second end of the first copper bar, 23. Second copper bar, 231. First end of the second copper bar, 232. Second end of the second copper bar, 24. Third copper bar, 241. First end of the third copper bar, 242. Second end of the third copper bar, 25. Circuit protection device, 26. Information collector, 27. Low-voltage connector, 28. Panel, 281. Second mounting hole;
11. Cell,
12. Flexible circuit board, 121. Negative terminal, 122. Positive terminal, 123. Connecting arm, 124. Connector, 125. Power connecter, 30. Upper housing, 31. Fourth mounting hole, 32. Sixth mounting hole, 40. Lower housing, 41. Fifth mounting hole, 42. Seventh mounting;
200. Battery pack, 300. Vehicle

### DETAILED DESCRIPTION

Specific implementations of the present disclosure are described in detail below with reference to the accompanying drawings. It should be understood that the specific implementations described herein are merely used for describing and explaining the present disclosure, and are not intended to limit the present disclosure.

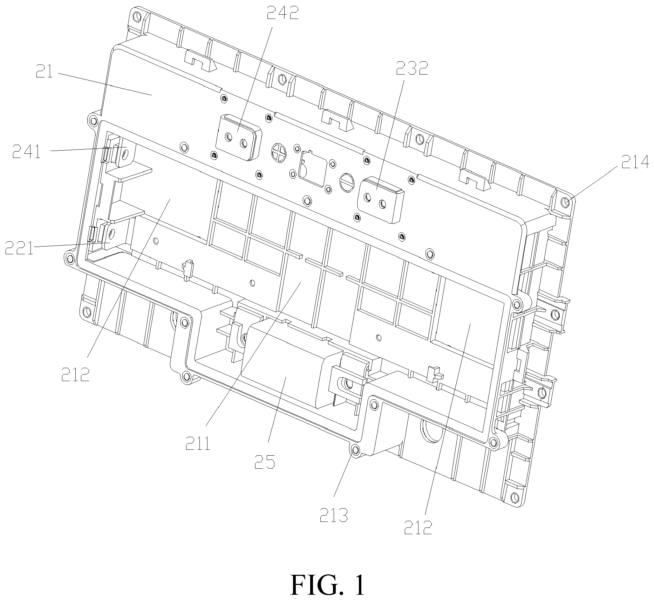

As shown in FIG. 1 to FIG. 4, a battery power lead-out integrated structure 100 according to the present disclosure includes an end plate 21 and a copper bar. The end plate 21 is made of an insulating material and serves as a part of a battery pack housing. The copper bar is used to lead out two electrodes of a battery to outside of the battery pack housing, that is, the copper bar leads out energy (electric energy) of a battery to the outside of the battery pack housing. The copper bar is encapsulated in the end plate 21 by injection molding, and an electrical connection portion of the copper bar is exposed from the end plate 21.

In the battery power lead-out integrated structure 100 of the present disclosure, only parts to be electrically connected to a positive lead-out end and a negative lead-out end of the battery are exposed by encapsulating the copper bar in the end plate 21 by injection molding, which can reduce the use of an insulating film covered on a surface of the copper bar and can reduce costs. In addition, the copper bar and the end plate 21 are fixedly mounted by injection molding, which solves the technical problem of leakage as a result of friction with the battery pack housing if the copper bar passes through the opening on the battery pack housing, and the end plate 21 has better wear resistance than the insulating film, thereby increasing safety. Furthermore, the copper bar is integrated on the end plate 21, so that inner space of the battery pack 200 can be effectively saved.

Specifically, electrical connection portions of the copper bar may be two ends of the copper bar, that is, the two ends of the copper bar are exposed, and a part between the two ends is encapsulated in the end plate 21 by injection molding.

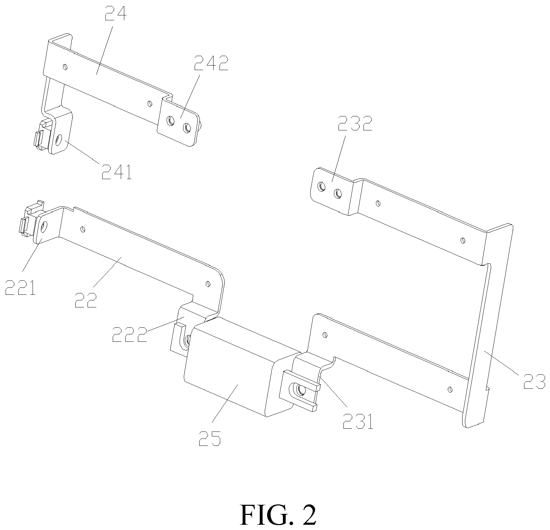

In the present implementation, as shown in FIG. 2, the battery power lead-out integrated structure 100 further includes a circuit protection device 25 mounted on the end plate 21. The copper bar includes a first copper bar 22, a second copper bar 23, and a third copper bar 24, a first end 221 of the first copper bar 22 being connected to a first electrode lead-out end of a battery, a second end 222 of the first copper bar 22 being connected to one end of the circuit protection device 25, a first end 231 of the second copper bar 23 being connected to the other end of the circuit protection device 25, a second end 232 of the second copper bar 23 being exposed from an external side surface of the end plate 21 to be connected to outside, a first end 241 of the third copper bar 24 being connected to a second electrode lead-out end of the battery, and a second end 242 of the third copper bar 24 being exposed from the external side surface of the end plate 21 to be connected to the outside. In other words, the first copper bar 22 and the second copper bar 23 are used to lead out a first electrode of the battery, and the third copper bar 24 is used to lead out a second electrode of the battery. The circuit protection device 25 is disposed between the first copper bar 22 and the second copper bar 23. When the battery pack 200 is abnormal, the circuit protection device 25 may be fused in time to cut off the current and ensure the safety of the entire battery pack 200. The circuit protection device 25 is a quick-wear component. In order to facilitate maintenance and replacement, all the structures of the circuit protection device 25 may be exposed from an external side surface of the end plate 21. Herein, the external side surface of the end plate 21 is a side of the end plate 21 facing away from the battery.

In the present implementation, the first electrode lead-out end of the battery is a negative lead-out end of the battery, and the second electrode lead-out end is a positive lead-out end of the battery. In other implementations, the first electrode lead-out end of the battery may be a positive lead-out end of the battery, and the second electrode lead-out end of the battery may be a negative lead-out end of the battery.

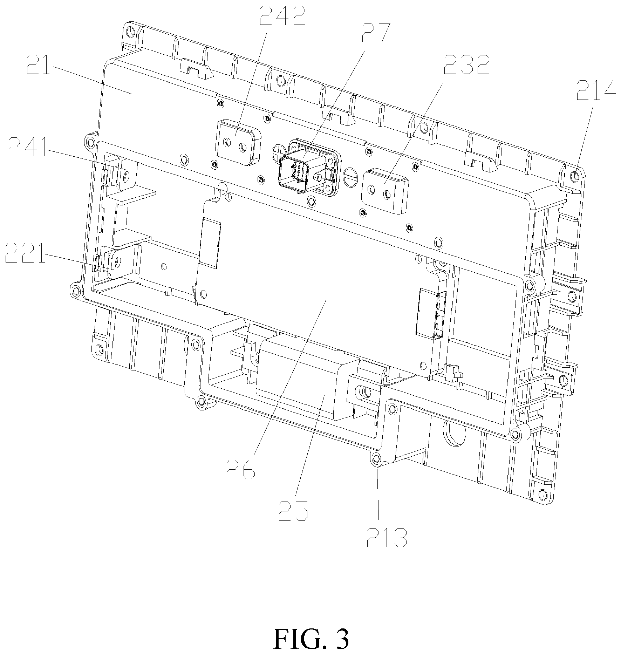

In order to avoid the influence of a by-product such as an electric arc on the battery pack during fusing of the circuit protection device 25, and to improve the safety of the battery pack 200, in the present implementation, as shown in FIG. 1 and FIG. 3, a groove 211 recessed inward is formed on the external side surface of the end plate 21, the circuit protection device 25 is disposed in the groove 211, and the bottom surface of the groove 211 separates the circuit protection device 25 from the battery.

The copper bar may be arranged in any suitable manner, which is not limited in the present disclosure. In the present implementation, the groove includes a bottom surface, extends along an edge of the bottom surface, and protrudes away from the battery to form a side wall of the groove 211. The first copper bar 22, the second copper bar 23, the third copper bar 24, and the circuit protection device 25 are all disposed along the side wall of the groove 211, and the first end 221 and the second end 222 of the first copper bar 22, the first end 231 of the second copper bar 23, and the first end 241 of the third copper bar 24 are all exposed from the side wall of the groove 211, so that the first end 221 and the second end 222 of the first copper bar 22, the first end 231 of the second copper bar 23, and the first end 241 of the third copper bar 24 are all located in the groove 211.

In the present implementation, as shown in FIG. 3, the battery power lead-out integrated structure 100 may further include an information collector 26 and a low-voltage connector 27. The information collector 26 is disposed in the groove 211, the low-voltage connector 27 is encapsulated on the end plate 21 by injection molding and protrudes from the external side surface of the end plate 21, the low-voltage connector 27 is electrically connected to the information collector 26, and the information collector 26 is connected to an external battery management system through the low-voltage connector 27. The low-voltage connector 27 is encapsulated on the end plate 21 by injection molding, so that assembling can be simplified and production efficiency can be improved.

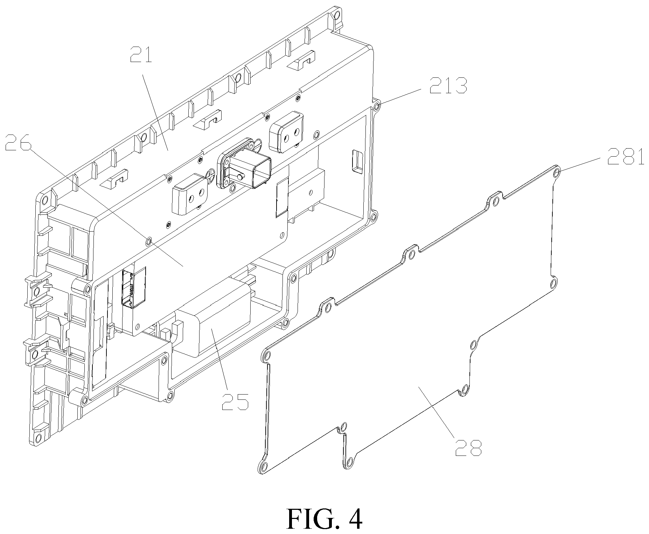

In the present implementation, as shown in FIG. 4, a panel 28 is further disposed on an outer side of the end plate 21, and the panel 28 is detachably connected to the end plate 21 and covers the groove 211. Specifically, an edge of the groove 211 may be provided with a first mounting hole 213, and an edge of the panel 28 may be provided with a second mounting hole 281, the second mounting hole 281 being fixed with the first mounting hole 213 by using screws. When it is necessary to repair or replace quick-wear parts such as the circuit protection device 25 and the information collector 26 in the groove 211, the panel 28 may be removed.

It should be noted that an area of the panel 28 is less than an area of the end plate 21, and the second end 232 of the second copper bar 23 and the second end 242 of the third copper bar 24 are not covered by the panel 28.

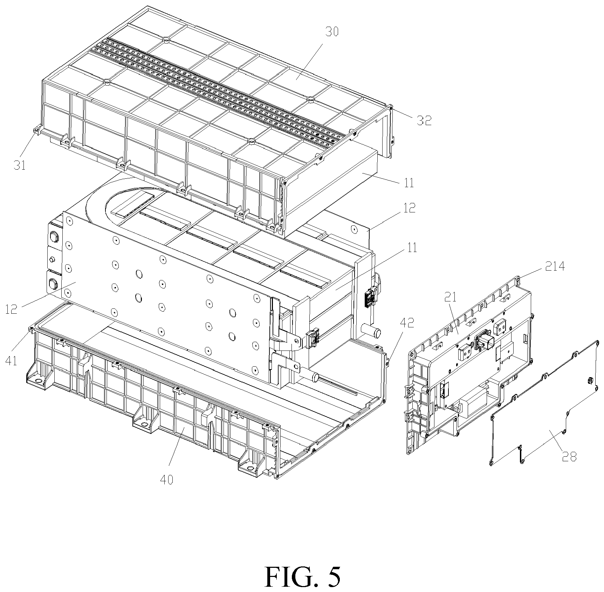

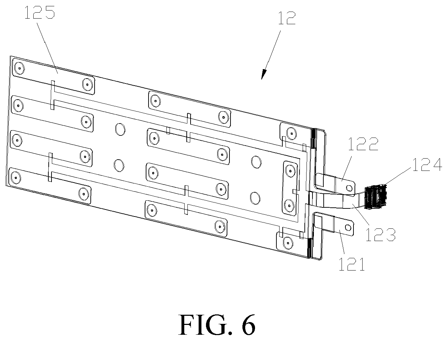

Specifically, as shown in FIG. 5 and FIG. 6, the battery includes a plurality of cells 11 and a power connecter 125. Two adjacent cells 11 are connected in series or in parallel through the power connecter 125. The battery has a positive lead-out end and a negative lead-out end. The first end 221 of the first copper bar 22 is electrically connected to the negative lead-out end of the battery, and the first end 241 of the third copper bar 24 is electrically connected to the positive lead-out end of the battery. Alternatively, the first end 221 of the first copper bar 22 is electrically connected to the positive lead-out end of the battery, and the first end 241 of the third copper bar 24 is electrically connected to the negative lead-out end of the battery.

As shown in FIG. 6, according to an implementation of the present disclosure, the battery further includes a flexible circuit board 12, the power connecter 125 is disposed on the flexible circuit board 12, and the positive lead-out end and the negative lead-out end of the battery are located on a positive terminal 122 and a negative terminal 121 of the flexible circuit board 12. A connecting arm 123 is also formed on the flexible circuit board 12, and an end of the connecting arm 123 is provided with a connector 124 for externally transmitting signals such as a temperature and a voltage of the battery pack 200.

In the present implementation, an opening 212 is formed on the bottom surface of the groove 211. The negative terminal 121 of the flexible circuit board 12 passes through the opening 212 to be connected to the first end 221 of the first copper bar 22, the positive terminal 122 of the flexible circuit board 12 passes through the opening 212 to be connected to the first end 241 of the third copper bar 24, and the connecting arm 123 passes through the opening 212 to connect the connector 124 to the information collector 26.

As shown in FIG. 5, the battery pack according to the present disclosure includes a battery, a battery pack housing body, and the battery power lead-out integrated structure as described above.

The battery is accommodated in the battery pack housing body, the battery pack housing body and an end plate 21 in the battery power lead-out integrated structure 100 constitute a battery pack housing, and the battery includes a plurality of cells 11 and a power connecter 125, two adjacent cells 11 being connected in series or in parallel through the power connecter 125.

In the present implementation, the battery pack housing body is a cuboid with an opening at one end, and the end plate 21 is connected to the opening of the battery pack housing body. In other implementations, the battery pack housing body and the end plate 21 may further have other suitable shapes or structures.

The battery pack housing body may be an integrated structure, or may be a separate structure. In the present implementation, as shown in FIG. 5, the battery pack housing body may include an upper housing 30 and a lower housing 40. A lower end and a front end of the upper housing 30 are open, and an upper end and a front end of the lower housing 40 are open. An edge of the lower end of the upper housing 30 is provided with a fourth mounting hole 31, and an edge of the upper end of the lower housing 40 is provided with a fifth mounting hole 41, the fourth mounting hole 31 and the fifth mounting hole 41 being fixed together by using screws. An edge of the front end of the upper housing 30 is provided with a sixth mounting hole 32, an edge of the front end of the lower housing 40 is provided with a seventh mounting hole 42, an edge of the end plate 21 is provided with a third mounting hole 214, the sixth mounting hole 32 and the seventh mounting hole 42 being fixed with the third mounting hole 214 respectively by using screws.

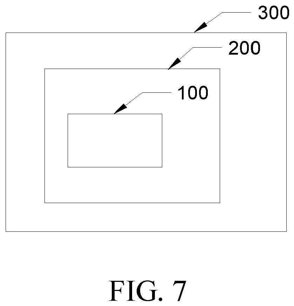

As shown in FIG. 7, the vehicle 300 according to the present disclosure includes the battery pack 200 as described above.

The implementations of the present disclosure are described in detail above with reference to the accompanying drawings. However, the present disclosure is not limited to the specific details in the foregoing implementations, a plurality of simple deformations may be made to the technical solution of the present disclosure within a range of the technical concept of the present disclosure, and these simple deformations still fall within the protection scope of the present disclosure.

It should be additionally noted that, the specific technical features described in the foregoing specific implementations may be combined in any proper manner in a case without conflict. To avoid unnecessary repetition, various possible combination manners are not described in the present disclosure.

In addition, different implementations of the present disclosure may also be arbitrarily combined without departing from the idea of the present disclosure, and these combinations shall still be regarded as content disclosed by the present disclosure.

## Claims

1. Abattery power lead-out integrated structure (100), comprising an end plate (21) as a part of a battery pack housing and a copper bar for leading out two electrodes of a battery to outside of the battery pack housing, wherein the end plate (21) is made of an insulating material, and the copper bar is encapsulated in the end plate (21) by injection molding, electrical connection portions of the copper bar being exposed.

2. The battery power lead-out integrated structure (100) according to claim 1, wherein the two ends of the copper bar are configured to be the electrical connection portions, the part between the two ends of the copper bar being encapsulated in the end plate (21) by injection molding.

3. The battery power lead-out integrated structure (100) according to claim 1 or 2, further comprising a circuit protection device (25) disposed on the end plate (21), wherein the copper bar comprises a first copper bar (22), a second copper bar (23), and a third copper bar (24), a first end (221) of the first copper bar (22) being connected to a first electrode lead-out end of the battery, a second end (222) of the first copper bar (22) being connected to one end of the circuit protection device (25), a first end (231) of the second copper bar (23) being connected to the other end of the circuit protection device (25), a second end (232) of the second copper bar (23) being exposed from an external side surface of the end plate (21), a first end (241) of the third copper bar (24) being connected to a second electrode lead-out end of the battery, and a second end (232) of the third copper bar (24) being exposed from the external side surface of the end plate (21).

4. The battery power lead-out integrated structure (100) according to claim 3, wherein the first electrode lead-out end of the battery is a negative lead-out end of the battery, and the second electrode lead-out end is a positive lead-out end of the battery.

5. The battery power lead-out integrated structure (100) according to claim 3 or 4, wherein a groove (211) recessed inward is formed on the external side surface of the end plate (21), the circuit protection device (25) being disposed in the groove (211).

6. The battery power lead-out integrated structure (100) according to claim 5, wherein the first copper bar (22), the second copper bar (23), the third copper bar (24), and the circuit protection device (25) are all disposed along a side wall of the groove (211), the first end (221) and the second end (222) of the first copper bar (22), the first end (231) of the second copper bar (23), and the first end (241) of the third copper bar (24) being all exposed from the side wall of the groove (211).

7. The battery power lead-out integrated structure (100) according to claim 5 or 6, further comprising an information collector (26) and a low-voltage connector (27), the information collector (26) being disposed in the groove (211), the low-voltage connector (27) being encapsulated in the end plate (21) by injection molding and protruding from the external side surface of the end plate (21), and the low-voltage connector (27) being electrically connected to the information collector (26).

8. The battery power lead-out integrated structure (100) according to any of claims 5 to 7, wherein an opening (212) is formed on a bottom surface of the groove (211).

9. The battery power lead-out integrated structure (100) according to any of claims 5 to 8, wherein a panel (28) is detachably connected to the outside surface of the end plate (21), the panel (28) covering the groove (211).

10. A battery pack (200), comprising a battery, a battery pack housing body, and the battery power lead-out integrated structure (100) according to any of claims 1 to 9, wherein the battery is accommodated in the battery pack housing body, the battery pack housing body and the end plate (21) constitute a battery pack housing, and the battery comprises a plurality of cells and a power connecter connecter, two adjacent cells being connected in series or in parallel through the power connecter.

11. A vehicle (300), comprising the battery pack (200) according to claim 10.
